# EUROPÄISCHE PATENTSCHRIFT

(11) **EP 2 622 282 B1**
(45) Veröffentlichungstag und Bekanntmachung des Hinweises auf die Patenterteilung: **25.11.2015**
(21) Anmeldenummer: 11763632.4
(22) Anmeldetag: 23.09.2011
(51) Int. Cl.: F24J 2/07, F24J 2/28, F24J 2/46

(54) **RECEIVER FÜR SOLARENERGIEGEWINNUNGSANLAGEN**
RECEIVER FOR SOLAR ENERGY PRODUCTION INSTALLATIONS
RÉCEPTEUR POUR DES INSTALLATIONS D'ÉNERGIE SOLAIRE

(30) Priorität: 29.09.2010 DE 102010046831
(43) Veröffentlichungstag der Anmeldung: 07.08.2013
(73) Patentinhaber: Kraftanlagen München GmbH, 80339 München (DE)
(72) Erfinder: HOFFSCHMIDT, Bernhard, 51467 Bergisch Gladbach (DE); KOLL, Gerrit, 80241 München (DE)
(74) Vertreter: Von Kreisler Selting Werner - Partnerschaft von Patentanwälten und Rechtsanwälten mbB
(86) Internationale Anmeldenummer: PCT/EP2011/066574
(87) Internationale Veröffentlichungsnummer: WO 2012/041773

(56) Entgegenhaltungen:
- DE-A1- 19 744 541
- DE-B3- 10 239 700
- DE-C1- 4 223 779
- US-A- 4 312 324
- US-A- 4 913 129

## Beschreibung

Die Erfindung betrifft einen Receiver für Solarenergiegewinnungsanlagen, mit zahlreichen Absorbern, die einfallende Solarstrahlung in Wärme umsetzen, um damit Heißluft zu erzeugen, welche die Antriebsenergie für Arbeitsmaschinen bilden kann.

In DE 197 44 541 C2 ist ein Solarempfänger beschrieben, der mehrere Absorbermodule aufweist. Jedes Absorbermodul enthält einen der einfallenden Solarstrahlung zugewandten Absorber, der porös ist. Durch den Absorber hindurch wird Luft angesaugt, die sich beim Passieren des Absorbers erwärmt. Der Receiver eignet sich für große Energiegewinnungsanlagen, bei denen zahlreiche Heliostaten auf ein Feld verteilt angeordnet sind, die Solarstrahlung auf den Receiver reflektieren. An dem Receiver entsteht somit eine hohe Strahlungskonzentration, wodurch sich am Absorber Temperaturen im Bereich von 1100°C ergeben. Bei dem Solarempfänger nach DE 197 44 541 C2 ist eine Tragstruktur vorgesehen, welche zahlreiche Absorbermodule trägt. Jedes Absorbermodul besteht aus einem Heißluftrohr aus Keramik und einem von dem Heißluftrohr gehaltenen Absorberkörper. Die erzeugte Heißluft wird für den Betrieb von Arbeitsmaschinen, beispielsweise Turbinen für Stromgeneratoren, benutzt und kühlt sich dabei ab, enthält aber noch Restwärme. Zur Nutzung dieser Restwärme wird die Luft zum Solarempfänger zurückgeführt und an den Wänden der Heißluftkanäle entlang geführt, um diese zu kühlen. Diese Rückluft strömt zwischen den Absorbermodulen hindurch, um an der Frontseite nach vorne hin auszutreten. Sie wird anschließend zusammen mit der Umgebungsluft in den Absorberkörper eingesaugt. Bei der bekannten Konstruktion wird die Rückluft zwischen den Absorbermodulen hindurch rechtwinklig zur Frontfläche ausgeblasen. Damit dringt sie weit in die Umgebungsluft ein und verteilt sich in dieser, insbesondere bei starken Windverhältnissen. Auf diese Weise geht ein Teil der in der Rückluft enthaltenen thermischen Energie verloren.

DE 102 39 700 B3 beschreibt einen Receiver für Solarenergiegewinnungsanlagen nach dem Oberbegriff von Anspruch 1.

Der Erfindung liegt die Aufgabe zugrunde, einen Receiver oder Solarempfänger im Hinblick auf eine Erhöhung des Wirkungsgrades zu verbessern.

Der Receiver nach der vorliegenden Erfindung ist durch den Patentanspruch 1 definiert. Erfindungsgemäß sind ausgewählte Absorbermodule gegenüber benachbarten Absorbermodulen unter Bildung einer Stufe nach vorne versetzt. An den Stufen sind Austrittsdüsen vorgesehen, welche derart ausgerichtet sind, dass ihre ausgestoßene Rückluft die Frontseiten mehrerer benachbarter Absorbermodule überstreicht. Die Rückluft wird also nicht zwischen die Absorbermodule geleitet, um durch sämtliche Zwischenräume nach außen zu strömen. Vielmehr wird ein großer Teil der Rückluft im Receiver zurückgehalten, um an definierten Stellen, nämlich an den ausgewählten Absorbermodulen, mit hoher kinetischer Energie auszuströmen. Hierdurch ist der Thermoschock für den Absorber geringer und die Wärmeverluste an den Absorbermodulen werden reduziert. Die Rückluft wird beispielsweise in vier Absorberreihen pro Receivermodul gesammelt und dann an einem ausgewählten Absorbermodul ausgeblasen. Es ist eine Anpassung des ausgewählten Absorbermoduls erforderlich, um genügend Raum für die Ausblasung zu schaffen. Dies geschieht durch das Versetzen des ausgewählten Absorbermoduls nach vorne (von der Frontseite nach außen). Dadurch wird auch vermieden, dass die Düsen frontseitig über das ausgewählte Absorbermodul hinaus vorstehen. Die Düsen sind in der Regel aus Metall und dürfen daher der direkten hochkonzentrierten Sonneneinstrahlung nicht ausgesetzt werden, weil sie sonst schmelzen würden. Erfindungsgemäß sind sie gegenüber dem ausgewählten Absorbermodul zwar zurückgesetzt, in Bezug auf die benachbarten Absorbermodule aber vorstehend.

Der Receiver kann derart ausgebildet sein, dass die Tragstruktur einen Hohlraum umschließt, den die Heißluftrohre durchqueren, so dass sie an der Rückseite des Hohlraums heraustreten. Hierbei können die Heißluftrohre innerhalb des Hohlraums mit Rückluft, die von einem mit der Heißluft gespeisten Wärmeverbraucher kommt, gekühlt werden. Wegen der Kühlung der Heißluftrohre brauchen diese nicht aus hochtemperaturbeständigem Material zu bestehen. Sie können aus Stahl hergestellt werden, was die Konstruktion des Receivers vereinfacht. Ein Receiver mit durch Rückluft gekühlten Heißluftrohren wird als Kaltreceiver oder Warmreceiver bezeichnet, je nach dem Grad der Kühlung.

Die ausgewählten Absorbermodule können schräge Frontseiten haben, die unter einem Winkel zu den Frontseiten der übrigen Absorbermodule verlaufen. Die Absorbermodule sind in Reihen angeordnet. Die ausgewählten Absorbermodule können sich in einer Reihe befinden. Hierzu benachbart sind mehrere Reihen normaler Absorbermodule angeordnet. Von dem ausgewählten Absorbermodul, an dem die Düsen angeordnet sind, wird aus den Düsen Rückluft auf die Frontseiten der benachbarten Absorbermodule verteilt. Das Ausstoßen der Luft erfolgt im Wesentlichen parallel zu der Ebene der Frontseiten der normalen Absorbermodule (zur Unterscheidung von den "ausgewählten Absorbermodulen").

Eine andere Art der Anordnung bzw. Orientierung der Absorbermodule besteht darin, dass die ausgewählten Absorbermodule jeweils eine Steilflanke einer aus den Absorbermodulen gebildeten Sägezahnstruktur definieren. Hierbei bilden die Steilflanken die Stufen und die Frontseiten der ausgewählten Absorbermodule befinden sich in einer Ebene mit den Frontseiten der benachbarten Absorbermodule.

Vorzugsweise sind die Austrittsdüsen durch die ausgewählten Absorbermodule gegen die einfallende Solarstrahlung abgeschattet. Dadurch wird vermieden, dass die Düsen von der hochkonzentrierten Solarstrahlung direkt getroffen werden. Die Düsen können entweder aus Schlitzdüsen, Lochdüsen oder anders geformten Düsen bestehen.

Eine weitere Variante der Erfindung sieht vor, dass die Tragstruktur ein Betongehäuse aus Hochtemperaturbeton aufweist. Hierbei ist eine Kühlung der Tragstruktur nicht erforderlich. Dies bedeutet, dass die Tragstruktur sich auf eine hohe Temperatur aufheizt. Dieser Typ von Receiver wird als Heißreceiver bezeichnet. Die Rückluft wird zu 100% ausschließlich als Ausströmluft verwendet.

Bei einem Warmreceiver kann eine Ausblasluftleitung vorgesehen sein, die zu den Austrittsdüsen führt. Von dieser Ausblasluftleitung kann ein Abzweig vorgesehen sein, der mit Kühlmänteln der Heißluftrohre verbunden ist. Durch Variieren des abgezweigten Anteils der Rückluft kann das Maß der Kühlung der Heißluftrohre verändert werden.

Der Receiver eignet sich für einen modularen Aufbau. Er kann hierzu aus mehreren quaderförmigen länglichen Receivermodulen bestehen, die an einer Seite die Absorbermodule aufweisen und auf der gegenüberliegenden Seite mit Auslässen der Heißluftrohre versehen sind. Die Hohlräume von in Längsrichtung hintereinander angeordneten Receivermodulen sind untereinander verbunden. Diese Hohlräume bilden bei einem Kaltreceiver Kanäle für die Zuführung der Rückluft. Bei einem Warmreceiver nehmen sie den abgezweigten Anteil der Rückluft auf, der den Kühlmänteln der Heißluftrohre zugeführt wird.

Mehrere Receivermodule können zu einem Subreceiver zusammengesetzt werden und mehrere Subreceiver können aneinandergesetzt den Receiver bilden. Im Allgemeinen ist der Receiver keine ebene Wand, sondern eine nach Art einer Leinwand gerundete Fläche, auf die die Solarstrahlung reflektiert wird.

Im Folgenden werden unter Bezugnahme auf die Zeichnungen Ausführungsbeispiele der Erfindung näher erläutert.

Es zeigen:
- Figur 1: eine schematische Frontansicht des Receivers mit dem Stutzen zum Zuführen der Rückluft,
- Figur 2: einen von mehreren Subreceivern, aus denen der Receiver zusammengesetzt ist,
- Figur 3: eines von mehreren Receivermodulen, aus denen der Subreceiver zusammengesetzt ist,
- Figur 4: einen schematischen Längsschnitt durch ein Receivermodul eines Kaltreceivers,
- Figur 5: einen schematischen Längsschnitt durch ein Receivermodul eines Warmreceivers und
- Figur 6: einen schematischen Längsschnitt durch ein Receivermodul eines Heißreceivers.

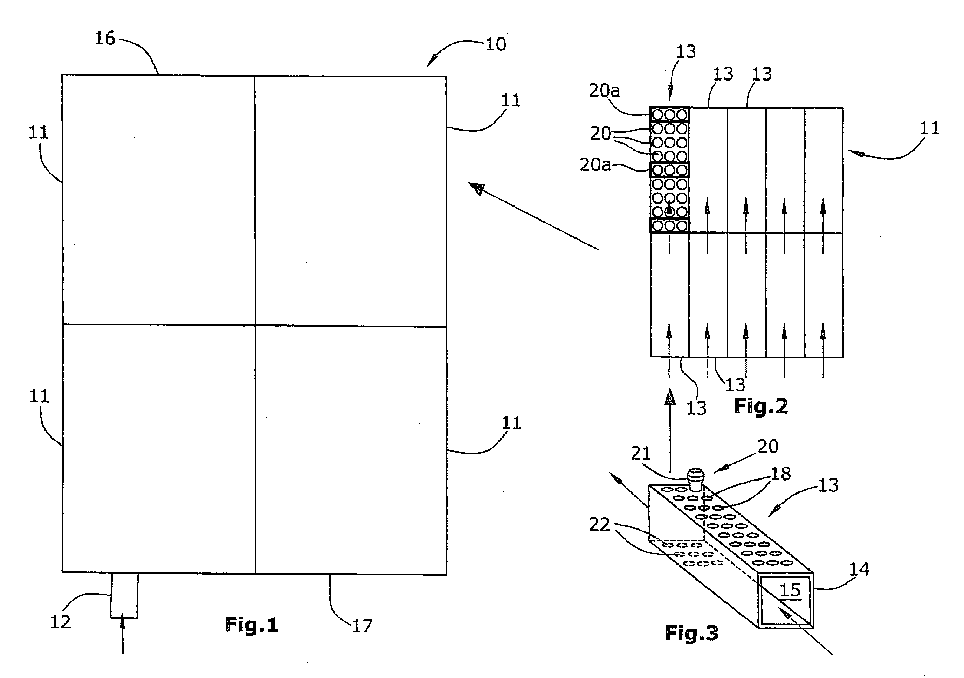

Der in Fig. 1 dargestellte Receiver 10 besteht aus einer Wandstruktur, die aus mehreren Subreceivern 11 zusammengesetzt ist. Die Subreceiver 11 sind in Frontansicht rechteckig und bilden gemeinsam eine konvex gewölbte Rechteckstruktur. Die Subreceiver haben Hohlräume, welche untereinander verbunden sind und mit einem Rücklufteinlass 12 in Verbindung stehen.

Ein Subreceiver 11 ist in Fig. 2 dargestellt. Er besteht aus mehreren Receivermodulen 13, die untereinander gleich ausgebildet sind und jeweils eine als Zylindersegment geformte Tragstruktur 14 aufweisen, welche aus Stahl besteht. Die Tragstruktur 14 ist an ihren beiden Stirnseiten offen, so dass die Hohlräume 15 von hintereinander angeordneten Absorbermodulen 20 miteinander in Fluidverbindung stehen. In den Fign. 2 und 3 sind die Strömungsrichtungen der Rückluft durch Pfeile eingezeichnet. Die randseitigen Receivermodule an dem oberen Rand 16 des Receivers 10 sind an ihren Stirnseiten geschlossen. Eine Verteilerleitung führt vom Rücklufteinlass 12 zu den unteren Enden der Receivermodule 13, die am unteren Rand 17 angeordnet sind, um die Kanäle aus hintereinander liegenden Hohlräumen der Receivermodule mit Rückluft zu speisen.

Das Receivermodul 13 gemäß Fig. 3 hat an einer Frontseite mehrere Löcher 18, in die Absorbermodule 20 eingesteckt sind. Das Absorbermodul 20 besteht aus hochtemperaturbeständiger Keramik oder anderem Material und hat die Form eines Rohres mit kelchförmigem Kopf 21. An der Rückseite (der Unterseite in Fig. 3) des Receivermoduls 13 befinden sich Auslässe 22 für die Heißluft eines jeden Absorbermoduls 20. Bei dem vorliegenden Ausführungsbeispiel sind die Absorbermodule 20 in Reihen von 3 x 9 angeordnet.

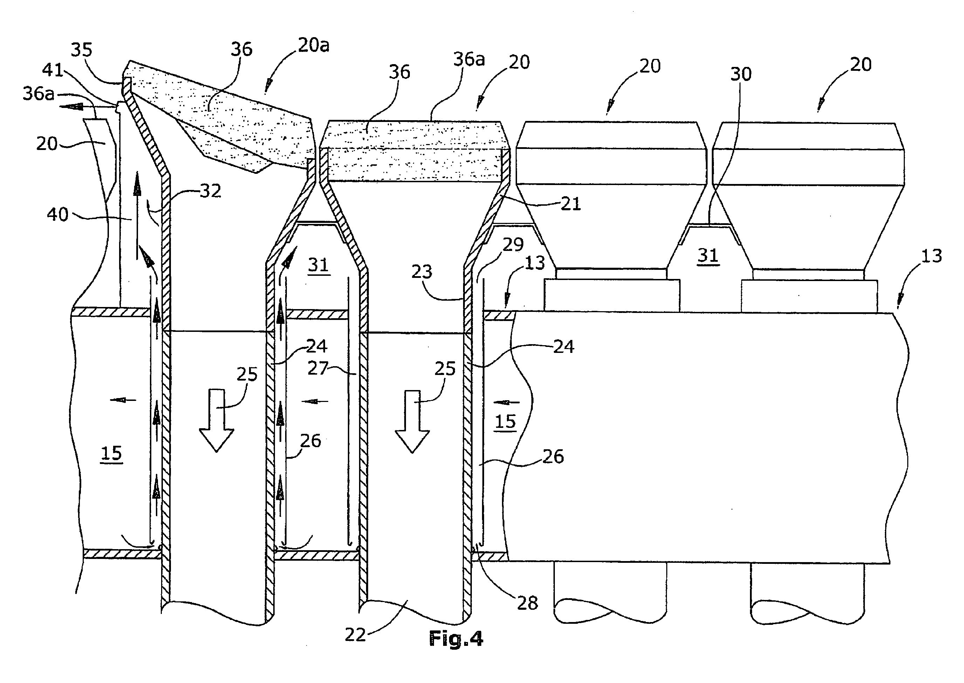

Fig. 4 zeigt die Ausbildung des Receivermoduls 13 für einen Kaltreceiver. In die Tragstruktur 14 sind die Receivermodule 13 eingesteckt. Jedes Absorbermodul weist angrenzend an den Kopf 21 einen Heißluftkanal 23 auf, an den sich ein aus Stahl bestehendes Heißluftrohr 24 anschließt. Das Heißluftrohr dient zum Abführen der eingesaugten Heißluft 25 und führt zu dem der Öffnung 22.

Das Heißluftrohr 24 ist innerhalb des Hohlraums 15 von einem rohrförmigen Kühlmantel 26 umgeben, der einen Ringraum 27 umschließt. Der Kühlmantel 26 hat einen unteren Einlass 28 und einen oberen Auslass 29. In Höhe der Köpfe 21 der Absorbermodule ist ein Absperrblech 30 angeordnet, das die Spalte zwischen den Absorberkelchen absperrt. Das Absperrblech 30 ist eine Lochplatte. Unter dem Absperrblech 30 ist ein Ausströmraum 31 außerhalb der Tragstruktur 14 gebildet, der mit einem seitlichen Auslass 32 in Verbindung steht. Durch das Absperrblech 30 wird verhindert, dass die Rückluft auch die Absorberkelche kühlt und dann mit der aufgenommenen Wärme in die Umgebungsluft ausgeblasen wird.

Fig. 4 zeigt neben drei normalen Absorbermodulen ein ausgewähltes Absorbermodul 20a. Dieses unterscheidet sich von den normalen Absorbermodulen dadurch, dass es unter Bildung einer Stufe 35 nach vorne versetzt ist. Bei dem vorliegenden Beispiel ist die Kelchstruktur asymmetrisch, wobei der der vorspringenden Stufe 35 gegenüberliegende Randbereich sich in einer Flucht befindet mit den Frontseiten der benachbarten Absorbermodule 20.

Jedes Absorbermodul 20, 20a enthält einen Absorberkörper 36 aus poröser hochtemperaturbeständiger Keramik. Die Frontfläche 36a des Absorberkörpers 36 bildet die Strahlungsempfangsfläche. Durch den Absorberkörper 36 wird Umgebungsluft eingesaugt, die sich beim Durchgang durch den heißen Absorberkörper erhitzt.

An der Außenseite des ausgewählten Absorbermoduls 20a ist ein Blechkasten 40 vorgesehen, der mit dem Hilfsraum 31 in Verbindung steht und daher die Rückluft, nachdem diese durch die Kühlmäntel 26 geströmt ist, aufnimmt. Wenn das vordere Ende des Blechkastens 40 ragt über die Ebene der Frontseiten 36a der in Fig. 4 links angrenzenden Absorbermodule hinaus und ist dort mit Austrittsdüsen 41 versehen, die die Rückluft im Wesentlichen parallel zu den Frontflächen 36a ausblasen. Der Blasimpuls reicht über mehrere hintereinander angeordnete Reihen von Absorbermodulen hinweg, wobei die als Querströmung zugeführte Rückluft zusammen mit der Außenluft in die Absorbermodule eingesaugt wird. Dadurch wird ein hoher Ausnutzungsgrad der in der Rückluft enthaltenen Restwärme erreicht, wobei Wärmeverluste in die Umgebungsluft hinein gering gehalten werden.

Durch (nicht dargestellte) Blenden wird die Luftentnahme aus dem Hohlraum 15 an jedem Receivermodul bzw. an jedem Absorbermodul so eingestellt, dass nur ein begrenztes Luftvolumen entnommen wird, so dass für die nachfolgenden Absorbermodule genügend Rückluft zur Verfügung steht und sämtliche Absorbermodule mit im Wesentlichen gleichem Rückluftvolumen versorgt werden. Entsprechendes gilt auch für die Volumenströme von Heißluft, die durch die Heißluftrohre 24 hindurch strömen. Hierzu sind Blenden vorgesehen, die so eingestellt werden können, dass die Strömungsraten untereinander gleich sind.

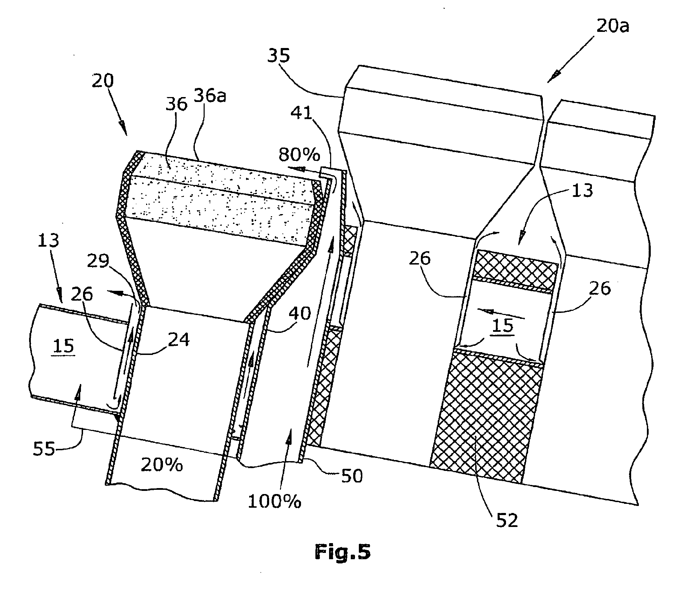

Fig. 5 zeigt ein Ausführungsbeispiel, bei dem die Absorbermodule 20 untereinander gleich sind und eine Sägezahnstruktur bilden, wobei sich die Schrägflanken über mehrere Absorbermodule erstrecken und die Steilflanke von einer Stufe 35 gebildet wird. Der Hohlraum 15 der Tragstruktur 14 dient hier nicht der Zuführung von Rückluft. Er ist vielmehr an beiden Enden geschlossen und dient nur der Aufnahme eines geringen Teiles der Rückluft (20%), der zum Kühlen der Heißluftrohre 24 abgezweigt wird.

Gemäß Fig. 5 wird die Rückluft durch ein Rückluftrohr 50 von der Rückseite her durch die Tragstruktur 14 hindurchgeführt, so dass die Austrittsdüse 41 sich vor der Frontfläche 36a des angrenzenden Absorbermoduls 20 befindet. Auch hier blasen die Austrittsdüsen 41 die Rückluft über mehrere Reihen von Absorbermodulen hinweg.

Das in Fig. 5 rechts von den Austrittsdüsen 41 - also in Ausströmrichtung hinter diesen - angeordnete Absorbermodul 20a bildet das ausgewählte Absorbermodul, welches die Stufe 35 definiert.

Wie aus Fig. 5 erkennbar ist, sind bei der sägezahnförmigen Anordnung der Absorbermodule Ausgleichskeile 52 an der Unterseite des Receivermoduls 13 erforderlich.

Gemäß Fig. 5 wird die Rückluft zu 100% dem Rückluftrohr 50 zugeführt. Von dem Rückluftrohr 50 führt ein Abzweig 55 in den Hohlraum 15 des Receivermoduls. Dort befinden sich die Kühlmäntel 26, die die Heißluftrohre 24 der Receivermodule umgeben. Die Ausströmöffnungen 29 der Kühlmäntel 26 führen in die Umgebungsluft, wobei die Kühlluft zunächst an der Außenseite des Absorbermoduls entlangströmt. Die zugeführte Rückluft wird derart aufgeteilt, dass über den Abzweig 55 nur ein geringer Anteil der Rückluft strömt (hier: 20%), während der weitaus größere Anteil (hier: 80%) den Austrittsdüsen 41 zugeführt wird. Wegen des geringen Anteils der zur Kühlung verwendeten Rückluft kann dieser ohne eine größere Beeinträchtigung des Wirkungsgrades des Receivers in die Umgebungsluft geblasen werden. Die Rückluft wird durch die horizontal mit höherer Kinetik strömende Luft auch horizontal umgelenkt.

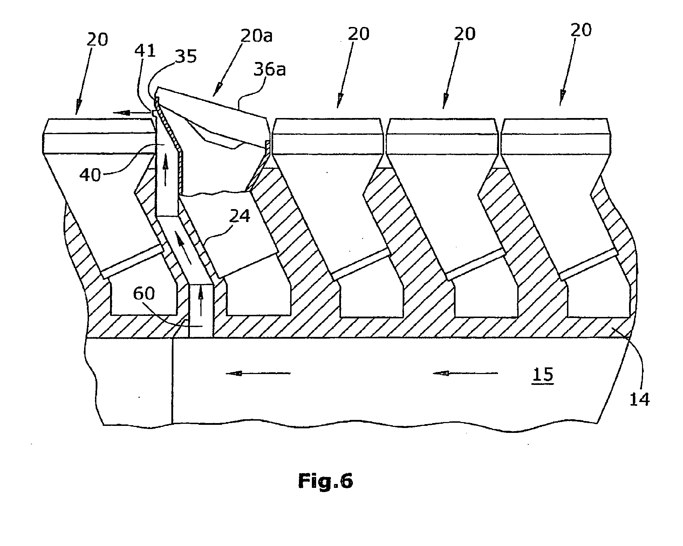

In Fig. 6 ist ein Ausführungsbeispiel eines Heißreceivers dargestellt. Bei dem Heißreceiver besteht die die Heißluftrohre 24 bildende Struktur aus Hochtemperaturbeton, der die Temperaturen der Heißluft aushält. Daher ist eine Kühlung der Heißluftrohre nicht erforderlich. Die Tragstruktur 14 besteht ebenfalls aus Beton, so dass das gesamte Receivermodul 13 einstückig aus demselben Material geformt werden kann.

Wie bei dem Ausführungsbeispiel von Fig. 4 ist das ausgewählte Absorbermodul 20a ein besonders geformtes Absorbermodul mit schräger Frontfläche, während die übrigen (normalen) Absorbermodule Frontflächen haben, die alle in einer Ebene liegen.

Von dem Hohlraum 15 der Tragstruktur 14 führt gemäß Fig. 6 an dem ausgewählten Absorbermodul ein Rückluftkanal 60, ggf. ein Metallrohr, zu den Austrittsdüsen 41, die auch hier unmittelbar an der Stufe 35, die von dem ausgewählten Absorbermodul 20a gebildet wird, angeordnet ist. Rückluftkanal 60 und Absorbermodul 35 sind natürlich voneinander getrennt.

Bei sämtlichen Ausführungsbeispielen sind die Austrittsdüsen 41 so angeordnet, dass sie gegenüber der auftreffenden hochkonzentrierten Solarstrahlung abgeschattet sind. Sie befinden sich ganz oder teilweise unter dem Kelch des Kopfes 21 des ausgewählten Absorbermoduls. Dadurch wird verhindert, dass die Düsen thermisch beschädigt werden.

Die Erfindung umfasst die folgenden Receivertypen: den Kaltreceiver, bei dem die gesamte Rückluft zur Kühlung der Heißluftrohre benutzt und anschließend wieder eingesaugt wird; den Warmreceiver, bei dem ein großer Anteil der Rückluft direkt der Wiedereinsaugung zugeführt wird, während ein kleiner Teil abgezweigt und zum Kühlen der Heißluftrohre benutzt wird; den Heißreceiver, bei dem keine Kühlung der Heißrohre mit Rückluft erfolgt und die gesamte Rückluft ausgeblasen wird.

## Patentansprüche

1. Receiver für Solarenergiegewinnungsanlagen, mit einer Tragstruktur (14), die an einer Frontseite mehrere Absorbermodule (20, 20a) trägt, die einen frontseitigen Absorber (36) und einen Heißluftkanal (23) enthalten, wobei sich an den Heißluftkanal ein Heißluftrohr (24) anschließt und rückgeführte Rückluft an der Frontseite austritt, um in die Absorbermodule eingesaugt zu werden,
**dadurch gekennzeichnet,**
**dass** ausgewählte Absorbermodule (20a) gegenüber benachbarten Absorbermodulen (20) unter Bildung einer Stufe (35) nach vorne versetzt sind, und dass an jeder Stufe Austrittsdüsen (41) vorgesehen sind, welche derart ausgerichtet sind, dass ihre ausgestoßene Rückluft die Frontseiten mehrerer benachbarter Absorbermodule überstreicht, so dass die aus einer Austrittsdüse austretende Rückluft mehrere Absorbermodule nacheinander überstreicht und in diese eingesaugt wird.

2. Receiver nach Anspruch 1, **dadurch gekennzeichnet, dass** die Tragstruktur (14) einen Hohlraum (15) umschließt, den die Heißluftrohre (24) durchqueren, so dass sie an der Rückseite des Hohlraumes (15) heraustreten, und dass die Heißluftrohre (24) innerhalb des Hohlraumes (15) jeweils einen mit Rückluft aus dem Hohlraum (15) gespeisten Kühlmantel (26) aufweisen.

3. Receiver nach Anspruch 1 oder 2, **dadurch gekennzeichnet, dass** die ausgewählten Absorbermodule (20a) schräge Frontseiten (36a) haben, die unter einem Winkel zu den Frontseiten der übrigen Absorbermodule (20) verlaufen.

4. Receiver nach Anspruch 1 oder 2, **dadurch gekennzeichnet, dass** die ausgewählten Absorbermodule (20a) jeweils die Steilflanke einer aus den Absorbermodulen gebildeten Sägezahnstruktur definieren.

5. Receiver nach einem der Ansprüche 1 - 4, **dadurch gekennzeichnet, dass** die Austrittsdüsen (41) durch die ausgewählten Absorbermodule (20a) gegen die einfallende Solarstrahlung abgeschattet sind.

6. Receiver nach Anspruch 1 oder einem der Ansprüche 3 bis 5, **dadurch gekennzeichnet, dass** die Tragstruktur (14) ein Betongehäuse aus Hochtemperaturbeton aufweist und die Heißluftrohre (24) von dem Betongehäuse gebildet werden, und dass in dem Betongehäuse Rückluftkanäle (60) zum Zuführen von Rückluft zu den Austrittsdüsen vorgesehen sind.

7. Receiver nach Anspruch 6, **dadurch gekennzeichnet, dass** der Rückluftkanal (60) zu einem Blechkasten (40) außen am Betongehäuse entlanggeführt ist.

8. Receiver nach Anspruch 2, **dadurch gekennzeichnet, dass** mehrere Austrittsdüsen (41) an eine Rückluftleitung (55) angeschlossen sind, dass von der Rückluftleitung ein Abzweig (55) in den Hohlraum (15) führt, und dass der Hohlraum (15) mit Kühlmänteln (26) der Heißluftrohre (24) in Strömungsverbindung steht.

9. Receiver nach Anspruch 2, **dadurch gekennzeichnet, dass** der Receiver (10) aus mehreren quaderförmigen länglichen Receivermodulen (13) besteht, die an einer Frontseite die Absorbermodule (20) aufweisen, dass auf der gegenüberliegenden Seite Auslässe (22) der Heißluftrohre vorgesehen sind, und dass die Hohlräume (15) von in Längsrichtung hintereinander angeordneten Receivermodulen (13) untereinander verbunden sind.

10. Receiver nach Anspruch 9, **dadurch gekennzeichnet, dass** mehrere Receivermodule (13) zu einem Subreceiver (11) zusammengesetzt sind, und dass mehrere Subreceiver aneinander gesetzt den Receiver (10) bilden.

## Claims

1. A receiver for solar energy production installations, having a support structure (14) bearing a plurality of absorber modules (20, 20a) at a front side, which modules comprise a front-side absorber (36) and a hot air duct (23), wherein a hot air tube (24) adjoins the hot air duct and recirculated return air exits from the front side to be drawn into the absorber modules,
**characterized in**
**that** selected absorber modules (20a) are offset in a forward direction with respect to adjacent absorber modules (20), thereby forming a step (35), and that outlet nozzles (41) are provided at each step, which nozzles are oriented such that the expelled return air flows over the front sides of a plurality of adjacent absorber modules so that the return air flowing from an outlet nozzle flows over a plurality of successive absorber modules and is drawn into the same.

2. The receiver of claim 1, **characterized in that** the support structure (14) encloses a cavity (15) traversed by the hot air tubes (24) so that they exit from the rear side of the cavity (15), and that, within the cavity (15), the hot air tubes (24) each comprise a cooling jacket (26) supplied with return air from the cavity (15).

3. The receiver of claim 1 or 2, **characterized in that** the selected absorber modules (20a) have inclined front sides (36a) extending under an angle with respect to the front sides of the remaining absorber modules (20).

4. The receiver of claim 1 or 2, **characterized in that** the selected absorber modules (20a) each define the steep flank of a sawtooth structure formed by the absorber modules.

5. The receiver of one of claims 1 - 4, **characterized in that** the outlet nozzles (41) are shaded against the incident solar radiation by the selected absorber modules (20a).

6. The receiver of claim 1 or one of claims 3 to 5, **characterized in that** the support structure (14) comprises a concrete housing of high-temperature concrete and the hot air tubes (24) are formed by the concrete housing, and that return air ducts (60) are provided in the concrete housing for supplying return air to the outlet nozzles.

7. The receiver of claim 6, **characterized in that** the return air duct (60) extends to a sheet metal box (40) on the outer side of the concrete housing.

8. The receiver of claim 2, **characterized in that** a plurality of outlet nozzles (41) is connected to a return air duct (55), that a branch (55) leads from the return air duct into the cavity (15), and that the cavity (15) is in flow connection with cooling jackets (26) of the hot air tubes (24).

9. The receiver of claim 2, **characterized in that** the receiver (10) is formed by a plurality of parallelepiped longitudinal receiver modules (13) comprising the absorber modules (20) at a front side, that outlets (22) of the hot air tubes are provided on the opposite side, and that the cavities (15) of receiver modules (13) arranged one behind the other in the longitudinal direction are connected with each other.

10. The receiver of claim 9, **characterized in that** a plurality of receiver modules (13) are combined into a sub-receiver (11), and that a plurality of juxtaposed sub-receivers form the receiver (10).

## Revendications

1. Récepteur pour installations d'énergie solaire, comprenant une structure porteuse (14) qui porte sur un côté frontal plusieurs modules absorbeurs (20, 20a) qui contiennent un absorbeur (36) frontal et un canal d'air chaud (23), un tube d'air chaud (24) se raccordant au canal d'air chaud, et l'air de retour renvoyé étant sortant sur le côté frontal pour être absorbé dans les modules absorbeurs (20, 20a),
**caractérisé en ce que**
des modules absorbeurs (20a) sélectionnés sont décalés vers l'avant par rapport à des modules absorbeurs (20) voisins avec formation d'un gradin (35) et **en ce que**, sur chaque gradin, il est prévu des buses de sortie (41) qui sont orientées de telle sorte que leur air de retour expulsé balaye les côtés frontaux de plusieurs modules absorbeurs voisins de telle sorte que l'air de retour sortant d'une buse de sortie balaye successivement plusieurs modules absorbeurs et est aspiré dans ces modules.

2. Récepteur selon la revendication 1, **caractérisé en ce que** la structure porteuse (14) enferme une cavité (15) que traversent les tubes d'air chaud (24) de telle sorte qu'ils ressortent sur le côté arrière de la cavité (15), et **en ce que** les tubes d'air chaud (24) présentent à l'intérieur de la cavité (15) respectivement une enveloppe de refroidissement (26) alimentée avec l'air de retour en provenance de la cavité (15).

3. Récepteur selon la revendication 1 ou 2, **caractérisé en ce que** les modules absorbeurs (20a) sélectionnés ont des côtés frontaux (36a) obliques qui forment un angle par rapport aux côtés frontaux des autres modules absorbeurs (20).

4. Récepteur selon la revendication 1 ou 2, **caractérisé en ce que** les modules absorbeurs (20a) sélectionnés définissent respectivement un flanc abrupt d'une structure en dents de scie formée par les modules absorbeurs.

5. Récepteur selon l'une des revendications 1 - 4, **caractérisé en ce que** les buses de sortie (41) sont protégées du rayonnement solaire incident par les modules absorbeurs (20a) sélectionnés.

6. Récepteur selon la revendication 1 ou selon l'une des revendications 3 à 5, **caractérisé en ce que** la structure porteuse (14) présente un caisson en béton en béton haute température, et les tubes d'air chaud (24) sont formés par le caisson en béton, et **en ce que** des canaux d'air de retour (60) sont prévus dans le caisson en béton pour la conduite de l'air de retour vers les buses de sortie.

7. Récepteur selon la revendication 6, **caractérisé en ce que** le canal d'air de retour (60) est conduit vers une boîte en tôle (40) à l'extérieur le long du caisson en béton.

8. Récepteur selon la revendication 2, **caractérisé en ce que** plusieurs buses de sortie (41) sont raccordées à une conduite d'air de retour (55), **en ce qu'**un embranchement (55) à partir de la conduite d'air de retour conduit dans la cavité (15), et **en ce que** la cavité (15) est en liaison d'écoulement avec des enveloppes de refroidissement (26) des tubes d'air chaud (24).

9. Récepteur selon la revendication 2, **caractérisé en ce que** le récepteur (10) est composé de plusieurs modules récepteurs (13) allongés de forme parallélépipédique qui présentent sur un côté frontal les modules absorbeurs (20), **en ce qu'**il est prévu des sorties (22) des tubes d'air chaud sur le côté opposé, et **en ce que** les cavités (15) de modules récepteurs (13) disposés les uns derrière les autres dans la direction longitudinale sont raccordées entre elles.

10. Récepteur selon la revendication 9, **caractérisé en ce que** plusieurs modules récepteurs (13) sont rassemblés en un sous-récepteur (11), et **en ce que** plusieurs sous-récepteurs juxtaposés forment le récepteur (10).
